Europäisches Patentamt

European Patent Office

Office européen des brevets

(11) Veröffentlichungsnummer: **0 431 116 B1**

(12) # EUROPÄISCHE PATENTSCHRIFT

(45) Veröffentlichungstag der Patentschrift: **04.05.94**

(51) Int. Cl.5: **H04N 5/44**

(21) Anmeldenummer: **90909189.4**

(22) Anmeldetag: **29.05.90**

(86) Internationale Anmeldenummer:
**PCT/NL90/00077**

(87) Internationale Veröffentlichungsnummer:
**WO 90/15504 (13.12.90 90/28)**

(54) **SCHALTUNGSANORDNUNG ZUM VERRINGERN DES ZEILEN- UND KANTENFLIMMERNS BEI FERNSEHBILDERN UND INTERPOLATIONSSCHALTUNG.**

(30) Priorität: **29.05.89 DE 3917365**

(43) Veröffentlichungstag der Anmeldung:
**12.06.91 Patentblatt 91/24**

(45) Bekanntmachung des Hinweises auf die Patenterteilung:
**04.05.94 Patentblatt 94/18**

(84) Benannte Vertragsstaaten:
**DE FR GB**

(56) Entgegenhaltungen:
**EP-A- 0 239 800**

**EBU Review Technical, issue 222, April 1987 (Brussel, BE) C. Hentschel: "Theoretical and subjective comparison of flicker-reduction methods" pages 70-79, see paragraph 6,7**

(73) Patentinhaber: **Philips Patentverwaltung GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **DREIER, Hans-Joachim
Im Brook 2
D-2358 Kaltenkirchen(DE)**

(74) Vertreter: **Peters, Carl Heinrich, Dipl.-Ing. et al
Philips Patentverwaltung GmbH,
Wendenstrasse 35c
D-20097 Hamburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Schaltungsanordnung zum Verringern des Zeilen- und Kantenflimmerns bei Fernsehbildern und auf eine Interpolationsschaltung die u.a. in der erstgenannten Schaltungsanordnung angewendet werden kann.

Das Großflächenflimmern bei der Wiedergabe insbesondere von Fernsehbildern mit 50 Teilbildern pro Sekunde kann durch Verdopplung der Teilbildwiederholungsfrequenz auf 100 Hz wirkungsvoll unterdrückt werden. Für die Erhöhung der Teilbildwiederholungsfrequenz ist jedoch besonderes Augenmerk auf die Darstellung im Zeilensprungverfahren zu legen, da die dabei wiedergegebenen Teilbilder auf der Bildwiedergabeanordnung räumlich um eine Zeilenbreite versetzt und zeitlich um eine Teilbildperiode verschoben sind. Für eine exakte Gewinnung einer höheren Teilbildwiederholungsfrequenz muß dieser räumliche und Zeitliche Zusammenhang Berücksichtigung finden. Anderenfalls können insbesondere an Kanten oder Linien sowie Bewegungen im Bild Störungen auftreten.

Es ist vorgeschlagen worden, zur Verdopplung der Teilbildwiederholungsfrequenz ein oder mehrere Teilbilder in einen Speicher mit niedriger Teilbildwiederholungsfrequenz einzuschreiben und mit entsprechend erhöhter Teilbildwiederholungsfrequenz auszulesen. Soll der dafür benötigte Speicherplatz auf maximal Zwei Teilbildspeicher beschränkt bleiben, stehen dafür prinzipiell nur zwei Verfahren zur Verfügung:

1. Das Verfahren der Teilbildwiederholung, für das ein Teilbildspeicher benötigt wird, und bei dem jedes Teilbild unmittelbar aufeinanderfolgend zweimal wiedergegeben wird (Teilbildfolge AABB), sowie

2.) das Verfahren der Vollbildwiederholung, für das zwei Teilbildspeicher benötigt werden. Dabei werden die beiden Teilbilder abwechselnd jeweils zweimal ausgelesen (Teilbildfolge ABAB).

Das Verfahren 1) bietet dabei eine in Flächen flimmerfreie, bewegungsrichtige Darstellung. Jedoch bleibt an horizontalen Kanten oder Linien eine Flimmerstörung von 25 Hz bestehen. Das Verfahren 2) unterdrückt dagegen sowohl Flächen- wie auch Kantenflimmern, dafür treten aber Fehler an bewegten Strukturen auf.

Die Erfindung hat die Aufgabe, Mittel zu schaffen für eine schaltungstechnisch möglichst einfache und zugleich fehlerarme Erzeugung eines Fernsehsignals mit hoher Teilbildwiederholungsfrequenz aus einem solchen mit einer niedrigen Teilbildwiederholungsfrequenz.

Zur Lösung dieser Aufgabe ist erfindungsgemäß eine Schaltungsanordnung zum Verringern des Zeilen- und Kantenflimmerns bei Fernsehbildern gemäß Anspruch 1 vorgesehen.

Die erfindungsgemäße Schaltungsanordnung stellt einen Kompromiß zwischen einer das eingangs genannte zweite Verfahren durchführenden Anordnung und einer exakten "Normwandlung" auf die doppelte Teilbildwiederholungsfrequenz dar. Dabei wird eine Teilbildfolge nach dem Schema AA*B*B erzeugt. In dieser Symbolik bedeuten A* und B* die durch die erfindungsgemäße Anordnung erzeugten Teilbilder. Aufgrund der Darstellung im Zeilensprungverfahren werden in der Bildwiedergabeanordnung die Bildpunkte des neu erzeugten Teilbildes A* örtlich an den Stellen der entsprechenden Bildpunkte des Teilbildes B wiedergegeben, während die Bildpunkte des neu erzeugten Teilbildes B* räumlich mit den Bildpunkten des Teilbildes A zusammenfallen.

Die erfindungsgemäße Schaltungsanordnung schafft somit ein Fernsehbild mit einem Zeilensprungraster mit der ursprünglichen Zeilenzahl, jedoch verdoppelter Teilbildzahl. Die einzelnen Zeilen der neu erzeugten Teilbilder werden gemäß folgenden Zusammenhängen gewonnen:

$$a^*(i,j) = med(a(i,j), a(i,j+1), b(i,j))$$ und
$$b^*(i,j) = med(b(i,j-1), b(i,j), a(i,j)).$$

Dabei ist mit $a^*(i,j)$ die Zeile j des neu erzeugten Teilbildes A* des mit i durchgezählten Teilbildzyklusses bezeichnet; entsprechende Bedeutung weisen die übrigen Symbole auf. Die Funktion med steht für die Bildung des Medianwertes der nachfolgend in Klammern angegebenen Werte.

Das Medianfilter wirkt als nichtlineares, adaptives Filter. Es bedarf somit keines weiteren Schaltungsaufwandes, insbesondere keines Bewegungsdetektors oder dergleichen, um bei der Bearbeitung der Fernsehbilder zwischen bewegten oder nicht bewegten Bildinhalten zu unterscheiden. Je nach dem gerade vorliegenden Bildinhalt des Fernsehbildes wird ein Bildpunkt aus dem ersten oder dem zweiten Teilbild a oder b substituiert, also adaptiv zwischen einer Darstellung nach dem eingangs genannten Verfahren 1) oder dem Verfahren 2) umgeschaltet. Dadurch wird an ausgedehnten, horizontalen Kanten oder Linien im Fernsehbild eine gute Reduktion des Flimmerns erreicht.

Der Medianwert entspricht dem mittleren der zu seiner Gewinnung herangezogenen Werte, so daß eine besonders einfache Anordnung erhalten wird, in der keine Rechenoperation, sondern nur eine Auswahl stattfindet.

Eine besonders vorteilhafte Ausführung wird dadurch erreicht, daß der Medianwert ein gewichtetes Mittel der zu seiner Gewinnung herangezogenen Werte ist. Insbesondere wird eine Verbesserung der vertikalen Bildauflösung erreicht, wenn bei der Berechnung des Medianwertes gemäß obigen Formeln der aus dem jeweils anders benannten Teilbild stammende Wert mit dem doppelten Gewicht der beiden aus demselben Teilbild herangezogenen Werte eingeht. Diese gewichtete Medianfilterung erfolgt nach den Beziehungen:

$$a^*(i,j) = med(a(i,j), a(i,j+1), b(i,j), b(i,j)),$$
$$b^*(i,j) = med(b(i,j-1), b(i,j), a(i,j), a(i,j)).$$

Dadurch wird der Medianwert als arithmetisches Mittel der beiden mittleren der zu seiner Gewinnung herangezogenen Werte definiert. Es können drei verschiedene Fälle auftreten:

1.     $a^*(i,j) = (a(i,j) + b(i,j))/2,$

2.     $a^*(i,j) = (a(i,j+1) + b(i,j))/2,$

3.     $a^*(i,j) = (b(i,j) + (i,j))/2 = b(i,j).$

In den vorstehenden Fällen 1 und 2 findet somit eine Mittelwertbildung in vertikaler Richtung statt, wohingegen im Fall 3 der Signalwert unverändert übernommen wird.

Die Medianfilterung hat den Vorteil, daß zwar einerseits das Flimmern stark unterdrückt wird, andererseits Sprünge im Bildsignal, d.h. Linien oder Kanten im Fernsehbild, unverändert scharf abgebildet werden. Insbesondere bleiben vertikale Kanten im Fernsehbild konturenscharf erhalten. Dagegen treten bei horizontalen Frequenzen im Bereich eines Drittels der Folgefrequenz der Abtastwerte Störungen auf. Diese werden bei der erfindungsgemäßen Schaltungsanordnung dadurch unterdrückt, daß beim Auftreten von Komponenten des Bildsignals in diesem Frequenzbereich von dem durch Medianfilterung gewonnenen Signal auf ein durch lineare Interpolation gebildetes Signal überblendet wird. Diese Überblendung oder Umsteuerung wird durch ein Umsteuersignal kontinuierlich vorgenommen, welches von der Intensität der Frequenzkomponenten in dem genannten Frequenzbereich abhängig ist. Dabei kann eine beliebige Kennlinie zwischen der Intensität und dem Umsteuersignal eingestellt werden, um ein besonders störungsarmes Fernsehbild zu erhalten.

Die vorstehenden Bildstörungen werden durch Anwendung der beschriebenen gewichteten Medianfilterung deutlich verringert. Zusammen mit der Umsteuerung auf die lineare Interpolation im genannten Frequenzbereich ergibt sich ein sehr ruhiges, störungsarmes, konturenscharfes Bild.

An dieser Stelle sei bemerkt, daß es aus dem Tagungsband der IEEE International Conference on Consumer Electronics 1986 bekannt ist, insbesondere aus den Seiten 182, 183 sowie 186, 187 des zugehörigen Tagungsbandes, ein "Medianfilter" zur räumlichen und zeitlichen Interpolation einzusetzen, die zur Konversion von einer Teilbildabtastung zu einer Vollbildabtastung, d.h. von einem im Zeilensprungverfahren vorliegenden Bildsignal zu einem kontinuierlich zeilenweise in Vollbildern vorliegenden Signal, verwendet wird.

Aus dem Tagungsband der "IEEE 1988 International Conference on Consumer Electronics", S. 76, 77, ist ein integrierter, digitaler Fernsehempfänger bekannt, bei dem ein Medianfilter zum Erzeugen zusätzlicher Bildzeilen eingesetzt wird, die zur Umsetzung der Abtastung vom Zeilensprungverfahren auf fortlaufende Abtastung benötigt werden.

Zu einem in der Zeichnung dargestellten Ausführungsbeispiel zeigen

Fig. 1     ein Schema zur Gewinnung der Teilbilder am Signalausgang aus dem zugeführten Fernsehsignal,

Fig. 2     ein zeitliches und räumliches Schema für die Anordnung der Teilbilder und Zeilen des zugeführten Fernsehbildes und der daraus gewonnenen Teilbilder im Zeilensprungverfahren,

Fig. 3     ein Blockschaltbild für eine erfindungsgemäße Schaltungsanordnung.

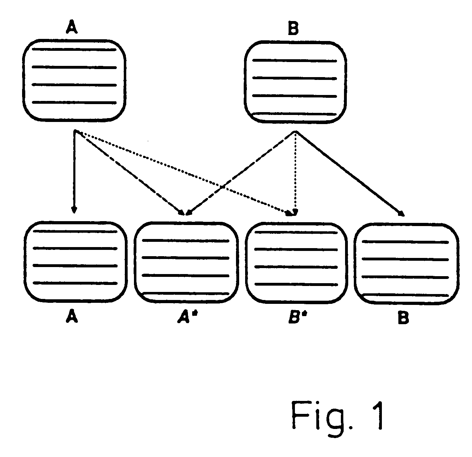

Fig. 1 zeigt im oberen Teil die beiden Teilbilder A und B eines vollständigen, im Zeilensprungverfahren übertragenen Fernsehbildes mit einfacher Teilbildwiederholungsfrequenz, wie sie der erfindungsgemäßen Schaltungsanordnung zugeführt werden. In der unteren Zeile sind die daraus gewonnenen Teilbilder mit verdoppelter Teilbildwiederholungsfrequenz in ihrer zeitlichen Abfolge dargestellt. Das ursprüngliche Teilbild A umfaßt im vorliegenden Beispiel die Bildzeilen mit ungerader, das ursprüngliche Teilbild B die Bildzeilen mit gerader Zeilennumerierung. Durch die erfindungsgemäße Schaltungsanordnung wird als erstes der Teilbilder mit verdoppelter Teilbildwiederholungsfrequenz das Teilbild A unverändert aus dem zugehörigen Teilbildspeicher ausgelesen. Das zweite Teilbild A* wird durch eine Medianfilterung aus den ursprünglichen Teilbildern A, B gewonnen; auf der Bildwiedergabeeinrichtung belebt es die Bildzeilen, die dem ursprünglichen Teilbild B zugeordnet sind. Somit ergeben die neu erzeugten Teilbilder A und A* zusammen ein vollständiges Bild im Zeilensprungverfahren.

Als drittes Teilbild in der verdoppelten Teilbildwiederholungsfrequenz wird das Teilbild B* durch eine zweite Medianfilterung ebenfalls aus den ursprünglichen Teilbildern A, B gewonnen. Die Zeilen des Teilbildes B* werden auf der Bildwiedergabeeinrichtung als Zeilen mit ungerader Numerierung dargestellt, d.h. örtlich mit den Zeilen des ursprünglichen Teilbildes A zusammenfallend. In einem vierten Schritt wird dann das ursprüngliche Teilbild B unverändert als viertes Teilbild mit verdoppelter Teilbildwiederholungsfrequenz ausgelesen und ergibt mit dem voraufgegangenen Teilbild B* ein vollständiges Fernsehbild im Zeilensprungverfahren.

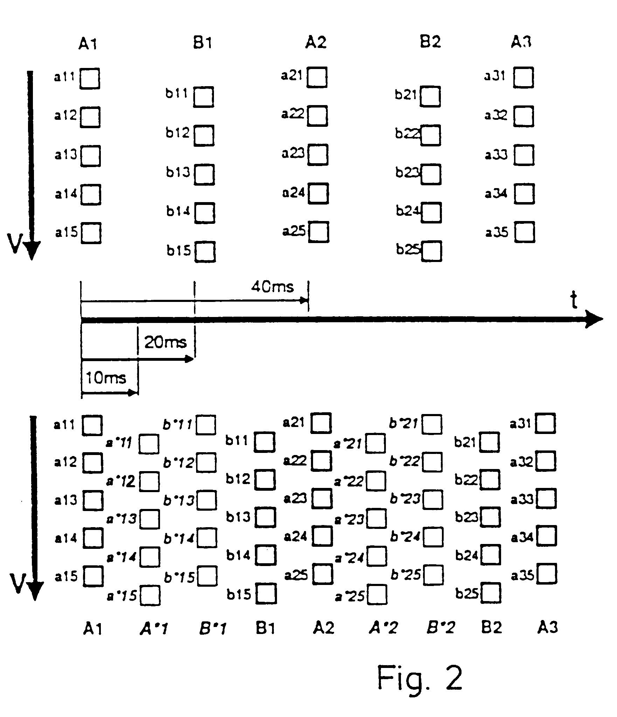

Fig. 2 zeigt in einer vereinfachten, schematischen Darstellung die Abfolge der einzelnen Zeilen aufeinanderfolgender ursprünglicher und mit verdoppelter Teilbildwiederholungsfrequenz erzeugter und dargestellter Teilbilder. Dabei sind A1 und B1 die beiden Teilbilder eines ersten, ursprünglichen Fernsehbildes mit einfacher Teilbildwiederholungsfrequenz, entsprechend A2, B2 die Teilbilder eines nachfolgenden, zweiten Fernsehbildes usw.. Deren einzelne Zeilen sind mit a11, a12, usw., bzw. b11, b12, ... a21, a22, usw. bezeichnet. Dabei entspricht die Bezeichnung aij der in der voraufgegangenen Beschreibung mit a(i,j) bezeichneten, durchnumerierten Zeile j eines Teilbildes A oder B des mit der fortlaufenden Nummer i bezeichneten, ursprünglichen Fernsehbildes. In der mit V bezeichneten Pfeilrichtung des Diagramms nach Fig. 2 ist die vertikale Anordnung dieser Zeilen untereinander auf der Bildwiedergabeeinrichtung angedeutet, in der waagerechten, mit t bezeichneten Richtung ist die zeitliche Abfolge der Teilbilder wiedergegeben.

Es ist zu erkennen, daß die einzelnen Zeilen aij und bij der Teilbilder der ursprünglichen Fernsehbilder gemäß der Darstellung im Zeilensprungverfahren kammartig ineinander greifen; dies wiederholt sich entsprechend für die Teilbilder der weiteren Fernsehbilder (A2, B2; A3, B3 ...).

Eine entsprechende Darstellung ist für die Zeilen der Teilbilder mit verdoppelter Teilbildwiederholungsfrequenz im unteren Teil der Fig. 2 gewählt. Durch die höhere-Teilbildwiederholungsfrequenz liegen die einzelnen Zeilen bezüglich der Zeitachse t im Vergleich zum oberen Teil der Fig. 2 im halben Abstand. Die Zeitabstände sind mit 10, 20 bzw. 40 msec entlang der Zeitachse t aufgetragen.

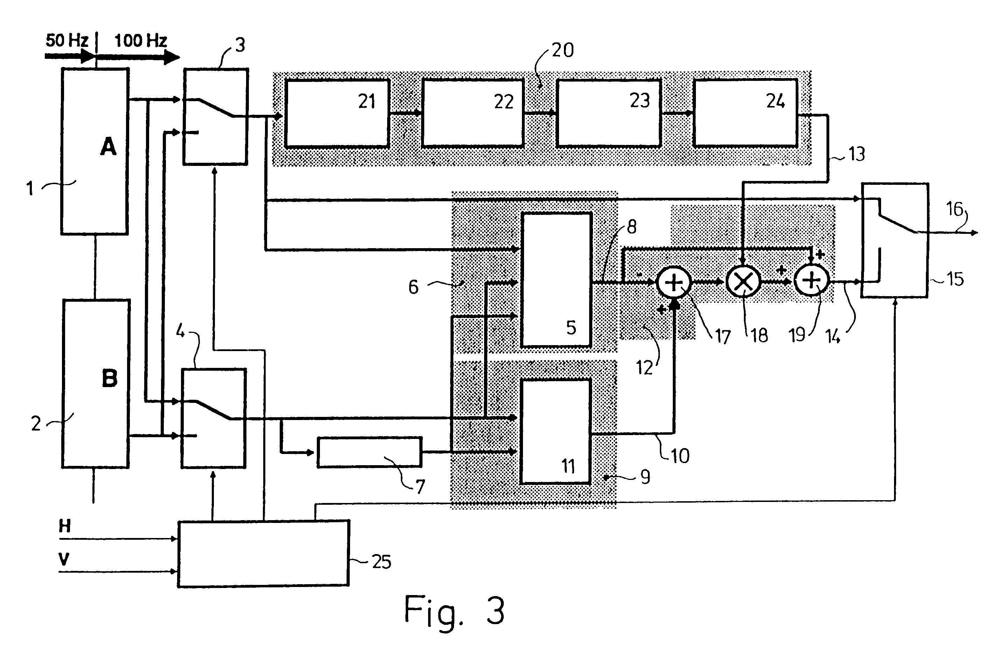

Die Schaltungsanordnung nach Fig. 3 umfaßt zwei Teilbildspeicher 1, 2 für die ursprünglichen Teilbilder A bzw. B, die in diese Teilbilder mit einer ersten Teilbildwiederholungsfrequenz, z.B. 50 Hz, eingelesen und aus ihnen mit verdoppelter Teilbildwiederholungsfrequenz, im vorliegenden Beispiel somit 100 Hz, ausgelesen werden.Über eine aus zwei Umschaltern 3, 4 bestehende Umschalt-Vorrichtung werden die Bildsignale der Teilbilder verschiedenen Signalbearbeitungsstufen zugeführt.

Als erste dieser Signalbearbeitungsstufen ist ein Medianfilter 5 als Teil einer Flimmerreduktionsanordnung 6 vorhanden. Diesem Medianfilter 5 werden das Signal vom Umschalter 3, das Signal vom Umschalter 4 sowie das über eine Verzögerungsanordnung 7 um eine Zeilendauer des Fernsehsignals mit verdoppelter Teilbildwiederholungsfrequenz verzögerte Signal vom Umschalter 4 zugeführt. Daraus wird ein Medianwert gewonnen und am Ausgang 8 des Medianfilters 5 zur Verfügung gestellt.

Parallel dazu wird aus dem unverzögerten und dem über die Verzögerungsanordnung 7 verzögerten Ausgangssignal des Umschalters 4 in einer Interpolationsanordnung 9 ein linearer Interpolationswert gewonnen und an einem Ausgang 10 bereitgestellt. Der lineare Interpolationswert wird zwischen einander entsprechenden Bildpunkten zweier aufeinanderfolgender Zeilen eines Teilbildes erzeugt; die Interpolationsanordnung 9 umfaßt dazu vorzugsweise einen sogenannten vertikalen Tiefpaß 11.

In einer nachgeschalteten Umsteueranordnung 12 wird nach Maßgabe eines Umsteuersignals HDET, das über eine Leitung 13 zugeführt wird, eine Linearkombination zwischen den Medianwerten am Ausgang 8 des Medianfilters 5 und den Interpolationswerten am Ausgang 10 der Interpolationsanordnung 9 gebildet. Über einen Ausgang 14 der Umsteueranordnung 12 sowie einen Umschalter 15 gelangt diese Linearkombination an einen Signalausgang 16. Die Umsteueranordnung 12 umfaßt eine Kettenschaltung eines Subtrahierers 17, eines Multiplizierers 18 und eines Addierers 19. Im Subtrahierer 17 wird der Medianwert vom Interpolationswert subtrahiert, die Differenz wird im Multiplizierer 18 mit dem Umsteuersignal HDET von der Leitung 13 multipliziert, das einen Wertebereich zwischen 0 und 1 aufweist, und anschließend wird das so gebildete Signal dem Medianwert zuaddiert. Über den Umschalter 15 wird dem Signalausgang 16 wahlweise ein unbearbeitetes Teilbild von den Teilbildspeichern 1, 2 über die Umschaltvorrichtung 3, 4 zugeleitet.

Die Schaltungsanordnung nach Fig. 3 enthält ferner einen Horizontaldetektor 20, der die Kettenschaltung eines Hochpasses 21, eines Gleichrichters 22 und eines Tiefpasses 23 umfaßt sowie einer Umsteuersignalformstufe 24, durch die das Umsteuersignal HDET mit dem Wertebereich von 0 bis 1 im gesamten Amplitudenbereich des Tiefpasses 23 bzw. des von diesem abgegebenen Signals gebildet wird. Der Hochpaß 21 ist so abgestimmt, daß alle Signalanteile im Fernsehbild im Bereich eines Drittels der Abtastfrequenz und darüber durchgelassen, sonstige Signalanteile jedoch unterdrückt werden. Die durchgelassenen Signalanteile werden gleichgerichtet und im Tiefpaß 23 von höherfrequenten Störungen bzw. Mischprodukten befreit. Die Umsteuersignalformstufe liefert das Umsteuersignal HDET an die Leitung 13, die somit einen Ausgang des Horizontaldetektors 20 bildet.

Die Umschalter 3, 4 und 15 werden in der Schaltungsanordnung gemäß Fig. 3 durch eine von den Horizontalsynchronsignalen H und den Vertikalsynchronsignalen V des Fernsehbildes gesteuerte Ablaufsteuerung 25 in ihre zu den einzelnen Teilbildern des Fernsehbildes benötigten Stellungen geschaltet. Durch die Ablaufsteuerung 25 wird somit am Signalausgang 16 als erstes Teilbild das erste Teilbild des Eingangssignals, als zweites bzw. drittes Teilbild anstelle der Bildpunkte des zweiten bzw. ersten Teilbildes des Eingangssignals die von der Umsteueranordnung 12 zugeführten Signale und als viertes Teilbild das zweite Teilbild des Eingangssignals geliefert. Die Ablaufsteuerung wird über die Horizontal- und die Vertikalsynchronsignale H bzw. V auch zur Steuerung der Teilbildspeicher 1, 2 synchron gesteuert.

In der Umsteuersignalformstufe 24 können verschiedene Abhängigkeiten zwischen dem Ausgangssignal des Tiefpasses 23 und dem zu erzeugenden Umsteuersignal HDET dargestellt werden. Beispielsweise wird ein unterer und ein oberer Schwellenwert definiert. Unterschreitet das Ausgangssignal des Tiefpasses 23 den unteren Schwellenwert, wird das Umsteuersignal HDET auf 0 gesetzt und werden nur die Medianwerte vom Ausgang 8 an den Ausgang 14 weitergeleitet. Sowie das Ausgangssignal vom Tiefpaß 23 den unteren Schwellenwert überschreitet, wird das Umsteuersignal HDET > 0 und demgemäß werden den Medianwerten vom Ausgang 8 Teile der Interpolationswerte vom Ausgang 10 überlagert. Erreicht das Ausgangssignal vom Tiefpaß 23 den oberen Schwellenwert, werden nur noch die Interpolationswerte vom Ausgang 10 an den Ausgang 14 geleitet, das Umsteuersignal HDET wird dann zu 1 gesetzt. Die Interpolationswerte enthalten keine spektralen Fremdkomponenten; auf diese Weise werden unerwünschte Effekte, insbesondere Oberschwingungen, der nicht-linearen Signalverarbeitung durch das Medianfilter 5 vermieden, und zwar in Bereichen, in denen ohnehin keine ausgeprägten Kantenstukturen auftreten können. Die durch das Medianfilter 5 angestrebte Flimmerreduktion wird durch die Umsteuerung somit nicht beeinflußt. Durch die "weiche" Umsteuerung zwischen der Medianfilterung und der Interpolation werden außerdem zusätzliche Fehler durch Schaltvorgänge vermieden.

Die erfindungsgemäße Benutzung des Horizontaldetektors 20 um Fehlinterpolationen zu vermeiden kann gemäß einem weiteren Aspekt der Erfindung auch bei Zeilenzahlverdopplung oder Vollbildabtastungskonversion angewendet werden.

## Patentansprüche

1. Schaltungsanordnung zum Verringern des Zeilen- und Kantenflimmerns bei Fernsehbildern, die als Folge von Abtastwerten im Zeilensprungverfahren und mit einer gegenüber einem Eingangssignal verdoppelten Teilbildwiederholungsfrequenz dargestellt werden, mit

- je einem Teilbildspeicher (1, 2) zum fortlaufenden Abspeichern des ersten Teilbildes A und des darauffolgenden zweiten Teilbildes B des Eingangssignals mit einer ersten Teilbildwiederholungsfrequenz und zum wechselweisen Auslesen mit der zweiten, verdoppelten Teilbildwiederholungsfrequenz über eine Umschaltvorrichtung (3, 4), die einen ersten Ausgang und einen zweiten Ausgang besitzt, und so schaltbar ist, daß in einer ersten Stellung Teilbild A am ersten und Teilbild B am zweiten Ausgang anliegt und in einer zweiten Stellung Teilbild A am zweiten und Teilbild B am ersten Ausgang anliegt,

- einer Flimmerreduktionsschaltung (6) mit einem Medianfilter (5) zum Gewinnen je eines Medianwertes aus dem Wert je eines ersten sowie eines dazu um eine Zeile versetzten zweiten Bildpunktes eines über den zweiten Ausgang der Umschaltvorrichtung zugeführten Teilbildes und dem Wert eines räumlich zwischen diesen Bildpunkten wiederzugebenden Bildpunktes des über den ersten Ausgang der Umschaltvorrichtung zugeführten Teilbildes,

- einer Interpolationsanordnung (9) zum Gewinnen eines linearen Interpolationswertes zwischen einander entsprechenden Bildpunkten zweier aufeinanderfolgender Zeilen eines über den zweiten Ausgang der Umschaltvorrichtung zugeführten Teilbildes,

- einer Umsteueranordnung (12) zum wahlweisen Zuführen des Medianwertes oder des Interpolationswertes oder einer daraus gewonnenen Linearkombination an einen Signalausgang (16) nach Maßgabe eines Umsteuersignals (HDET),

- einem Horizontaldetektor (20) zum Erkennen von Signalanteilen in den Teilbildern (A, B) mit horizontalen Frequenzen im Bereich eines Drittels der Folgefrequenz der Abtastwerte und zum Liefern des Umsteuersignals (HDET) als Maß der Intensität der genannten Signalanteile,

- sowie einer Ablaufsteuerung (25), durch die am Signalausgang als erstes Ausgangsteilbild (A) das erste Teilbild A des Eingangssignals, als zweites (A*) bzw. drittes (B*) Ausgangsteilbild anstelle der Bildpunkte des zweiten (B) bzw. ersten (A) Teilbildes des Eingangssignals die von der Umsteueranordnung (12)-zugeführten Signale, wobei die Umschaltvorrichtung beim zweiten Ausgangsteilbild in der zweiten Stellung und beim dritten Ausgangsteilbild in der ersten Stellung geschaltet ist, und als viertes Ausgangsteilbild (B) das zweite Teilbild B des Eingangssignals geliefert wird.

2. Schaltungsanordnung nach Anspruch 1, dadurch gekennzeichnet, daß der Medianwert ein gewichtetes Mittel der zu seiner Gewinnung herangezogenen Werte ist.

3. Schaltungsanordnung nach Anspruch 2, dadurch gekennzeichnet, daß bei der Berechnung des Medianwertes der aus dem jeweils anders benannten Teilbild stammende Wert mit dem doppelten Gewicht der beiden aus demselben Teilbild herangezogenen Werte eingeht.

4. Schaltungsanordnung nach Anspruch 1, dadurch gekennzeichnet, daß der Horizontaldetektor (20) die Kettenschaltung eines Hochpasses (21), eines Gleichrichters (22) und eines Tiefpasses (23) umfaßt sowie einer Umsteuersignalformstufe (24), durch die das Umsteuersignal (HDET) mit einem Wertebereich von 0 bis 1 im gesamten Amplitudenbereich des Tiefpasses (23) gebildet wird.

5. Interpolationsschaltung für Bildsignale, die als Folge von Abtastwerten im Zeilensprungverfahren dargestellt werden, mit
   - einer Speicheranordnung (1, 2, 3, 4) zum Abgeben zwei aufeinander folgende Teilbilder,
   - einer nicht-linearen Interpolationsschaltung (6) mit einem Medianfilter (5) zum Gewinnen je eines Medianwertes aus dem Wert je eines ersten sowie eines dazu um etwa eine Zeile versetzten zweiten Bildpunktes eines ersten Teilbildes dieser Teilbilder und dem Wert eines räumlich zwischen diesen Bildpunkten wiederzugebenden (dritten) Bildpunktes des anderen Teilbildes dieser Teilbilder,
   - einer linearen Interpolationsanordnung (9) zum Gewinnen eines linearen Interpolationswertes zwischen einander entsprechenden Bildpunkten zweier aufeinanderfolgender Zeilen des ersten Teilbildes dieser Teilbilder,
   - einer Umsteueranordnung (12) zum wahlweisen Zuführen des Medianwertes oder des linearen Interpolationswertes oder einer daraus gewonnenen Linearkombination an einen Signalausgang (14) nach Maßgabe eines Umsteuersignals (HDET), und

   - einem Horizontaldetektor (20) zum Erkennen von Signalanteilen in den Teilbildern (A, B) mit horizontalen Frequenzen im Bereich eines Drittels der Folgefrequenz der Abtastwerte und zum Liefern des Umsteuersignals (HDET) als Maß der Intensität der genannten Signalanteile.

6. Interpolationsschaltung nach Anspruch 5, dadurch gekennzeichnet, daß der Medianwert ein gewichtetes Mittel der zu seiner Gewinnung herangezogenen Werte ist.

7. Interpolationsschaltung nach Anspruch 6, dadurch gekennzeichnet, daß bei der Berechnung des Medianwertes der aus dem jeweils anders benannten Teilbild stammende Wert mit dem doppelten Gewicht der beiden aus demselben Teilbild herangezogenen Werte eingeht.

8. Interpolationsschaltung nach Anspruch 5, dadurch gekennzeichnet, daß der Horizontaldetektor (20) die Kettenschaltung eines Hochpasses (21), eines Gleichrichters (22) und eines Tiefpasses (23) umfaßt sowie einer Umsteuersignalformstufe (24), durch die das Umsteuersignal (HDET) mit einem Wertebereich von 0 bis 1 im gesamten Amplitudenbereich des Tiefpasses (23) gebildet wird.

**Claims**

1. A circuit arrangement for reducing line and edge flicker in television pictures, which are displayed as a sequence of scanning values according to the line-interlaced principle and at a field repetition frequency which is doubled with respect to an input signal, which circuit arrangement comprises:
   - two field memories (1, 2) for continuously storing the first A and the subsequent second field B of the input signal at a first field repetition frequency and for alternately reading at the second doubled field repetition frequency through a change-over device (3, 4) which has a first output and a second output and is switchable in such a way that, in a first position, field A is present at the first output and field B is present at the second output and, in a second position, field A is present at the second output and field B is present at the first output,
   - a flicker-reducing circuit (6) having a median filter (5) for obtaining each time a median value from the values of a first pixel and a second pixel of a field supplied via the second output of the change-over device, said second pixel being shifted by a line with respect to the first pixel, and from the value of a pixel of the other field supplied via the first output of the change-over device to be spatially displayed between said pixels,

- an interpolation arrangement (9) for obtaining a linear interpolation value between corresponding pixels of two successive lines of a field supplied via the second output of the change-over device,
- a change-over arrangement (12) for selectively supplying the median value or the interpolation value or a linear combination obtained therefrom to a signal output (16) in dependence on a change-over signal (HDET),
- a horizontal detector (20) for recognizing signal components in the fields (A, B) at horizontal frequencies in the range of a third of the repetition frequency of the scanning values and for supplying the change-over signal (HDET) as a measure of the intensity of said signal components, and
- a process control means (25), by which, as the first output field (A) the first field A of the input signal, as the second (A*) and third output fields (B*), respectively, at the pixels of the second (B) and first fields (A), respectively, of the input signal, the signals supplied by the change-over arrangement (12), with the change-over device being switched in the second position at the second output field and in the first position at the third output field, and as the fourth output field (B) the second field B of the input signal are delivered at the signal output.

2. A circuit arrangement as claimed in Claim 1, characterized in that the median value is a weighted average of values used to obtain it.

3. A circuit arrangement as claimed in Claim 2, characterized in that during the calculation of the median value the value originating from the field each time designated differently enters with double the weight of the two values obtained from the same field.

4. A circuit arrangement as claimed in Claim 1, characterized in that the horizontal detector (20) comprises the chain circuit of a high-pass filter (21), of a rectifier (22) and of a low-pass filter (23) and a change-over signal forming stage (24), by which the change-over signal (HDET) is formed having a value range of 0 to 1 in the overall amplitude range of the low-pass filter (23).

5. An interpolation circuit for picture signals which are displayed as a sequence of scanning values according to the line-interlaced principle, which interpolation circuit comprises:
- a memory arrangement (1, 2, 3, 4) for supplying two consecutive fields,
- a non-linear interpolation circuit (6) having a median filter (5) for obtaining each time a median value from the values of a first pixel and a second pixel of a first field of these fields, said second pixel being shifted by substantially a line with respect to the first pixel and from the value of a (third) pixel of the other field of these fields to be spatially displayed between these pixels,
- a linear interpolation arrangement (9) for obtaining a linear interpolation value between corresponding pixels of two successive lines of the first field of these fields,
- a change-over arrangement (12) for selectively supplying the median value or the linear interpolation value or a linear combination obtained therefrom to a signal output (14) in dependence on a change-over signal (HDET), and
- a horizontal detector (20) for recognizing signal components in the fields (A, B) at horizontal frequencies in the range of a third of the repetition frequency of the scanning values and for supplying the change-over signal (HDET) as a measure of the intensity of said signal components.

6. An interpolation circuit as claimed in Claim 5, characterized in that the median value is a weighted average of values used to obtain it.

7. An interpolation circuit as claimed in Claim 6, characterized in that during the calculation of the median value the value originating from the field each time designated differently enters with double the weight of the two values obtained from the same field.

8. An interpolation circuit as claimed in Claim 5, characterized in that the horizontal detector (20) comprises the chain circuit of a high-pass filter (21), of a rectifier (22) and of a low-pass filter (23) and a change-over signal forming stage (24), by which the change-over signal (HDET) is formed having a value range of 0 to 1 in the overall amplitude range of the low-pass filter (23).

## Revendications

1. Montage de circuit permettant de réduire le papillotement des lignes et des contours dans des images de télévision, qui sont représentées sous la forme d'une suite de valeurs d'échantillonnage dans le balayage entrelacé et avec une fréquence de répétition de trames double par rapport à un signal d'entrée, comprenant :

   - chaque fois une mémoire de trames (1, 2) pour mémoriser en continu la première trame A et la deuxième trame B, qui suit, du signal d'entrée à une première fréquence de répétition de trames et pour lire en alternance à la deuxième fréquence de répétition de trames doublée, via un dispositif de commutation (3, 4), qui possède une première sortie et une deuxième sortie, et qui peut être commuté de telle sorte que, dans une première position, la trame A s'applique à la première sortie et la trame B s'applique à la deuxième sortie et que, dans une deuxième position, la trame A s'applique à la deuxième sortie et la trame B s'applique à la première sortie,
   - un circuit de réduction du papillotement (6) avec un filtre de médiane (5) pour obtenir chaque fois une valeur médiane tirée de la valeur de chaque fois un premier point d'image ainsi que d'un deuxième point d'image décalé vis-à-vis du premier d'une ligne, d'une trame acheminée par la deuxième sortie du dispositif de commutation, et de la valeur d'un point d'image de la trame acheminée par la première sortie du dispositif de commutation se reproduisant spatialement entre ces points d'image,
   - un circuit d'interpolation (9) pour obtenir une valeur d'interpolation linéaire entre des points d'image correspondants, de deux lignes successives d'une trame acheminée par la deuxième sortie du dispositif de commutation,
   - un circuit de remplacement (12) pour acheminer au choix la valeur médiane ou la valeur d'interpolation ou une combinaison linéaire tirée de celles-ci à une sortie de signal (16) en fonction d'un signal de remplacement (HDET),
   - un détecteur horizontal (20) pour identifier des fractions de signal dans les trames (A, B) avec des fréquences horizontales dans le domaine d'un tiers de la fréquence de répétition des valeurs d'échantillonnage et pour fournir le signal de remplacement (HDET) en tant que mesure de l'intensité des fractions de signal mentionnées,
   - ainsi qu'un dispositif de commande séquentielle (25), par lequel sont acheminés, à la sortie de signal en tant que première trame de sortie (A), la première trame A du signal d'entrée, en tant que deuxième (A*) ou troisième (B*) trame de sortie, au lieu des points d'image de la deuxième (B) ou de la première (A) trame du signal d'entrée, les signaux acheminés par le dispositif de remplacement (12), de sorte que le dispositif de remplacement soit commuté, pour la deuxième trame de sortie, dans la deuxième position et, pour la troisième trame de sortie, dans la première position, et, en tant que quatrième trame de sortie (B), la deuxième trame B du signal d'entrée.

2. Montage de circuit selon la revendication 1, caractérisé en ce que la valeur médiane est une moyenne pondérée des valeurs qui ont contribué à son obtention.

3. Montage de circuit selon la revendication 2, caractérisé en ce que, lors du calcul de la valeur médiane, la valeur provenant respectivement de la trame autrement désignée a une pondération double de celles des deux valeurs qui contribuent à la même trame.

4. Montage de circuit selon la revendication 1, caractérisé en ce que le détecteur horizontal (20) contient le circuit récurrent formé d'un filtre passe-haut (21), d'un redresseur (22) et d'un filtre passe-bas (23) ainsi qu'un étage de formation de signal de remplacement (24), par lequel le signal de remplacement (HDET) est formé avec un domaine de valeurs de 0 à 1 dans la totalité du domaine d'amplitude du filtre passe-bas (23).

5. Circuit d'interpolation pour signaux d'image, qui sont représentés comme une succession de valeurs d'échantillonnage dans le balayage entrelacé, comprenant :

   - un circuit de mémorisation (1, 2, 3, 4) pour délivrer deux trames successives,
   - un circuit d'interpolation non linéaire (6) avec un filtre de médiane (5) pour obtenir chaque fois une valeur médiane à partir de la valeur de chaque fois un premier point d'image, ainsi que d'un deuxième point d'image décalé du premier d'environ une ligne, d'une première trame de ces trames, et de la valeur d'un point d'image (troisième), se reproduisant spatialement entre ces points d'image, de l'autre trame de ces trames,

- un circuit d'interpolation linéaire (9) pour obtenir une valeur d'interpolation linéaire entre des points d'image correspondants de deux lignes successives de la première trame de ces trames,

- un circuit de remplacement (12) pour acheminer au choix la valeur médiane ou la valeur d'interpolation linéaire ou une combinaison linéaire obtenue à partir de celles-ci à une sortie de signal (14) en fonction d'un signal de remplacement (HDET), et

- un détecteur horizontal (20) pour identifier des fractions de signal des trames (A, B) ayant des fréquences horizontales dans le domaine d'un tiers de la fréquence de répétition des valeurs d'échantillonnage et pour délivrer le signal de remplacement (HDET) en tant que mesure de l'intensité des fractions de signal mentionnées.

6. Circuit d'interpolation selon la revendication 5, caractérisé en ce que la valeur médiane est une moyenne pondérée des valeurs qui ont contribué à son obtention.

7. Circuit d'interpolation selon la revendication 6, caractérisé en ce que, lors du calcul de la valeur médiane, on utilise la valeur provenant de la trame chaque fois autrement désignée avec une pondération double des deux valeurs qui ont contribué à la même trame.

8. Circuit d'interpolation selon la revendication 5, caractérisé en ce que le détecteur horizontal (20) comporte le circuit récurrent formé d'un filtre passe-haut (21), d'un redresseur (22) et d'un filtre passe-bas (23) ainsi qu'un étage de formation de signal de remplacement (24), par lequel le signal de remplacement (HDET) est formé avec un domaine de valeurs de 0 à 1 dans la totalité du domaine d'amplitude du filtre passe-bas (23).

Fig. 1

Fig. 2

Fig. 3

EP 0 431 116 B1